# EUROPEAN PATENT APPLICATION

(11) **EP 3 070 900 A1**
(43) Date of publication of application: **21.09.2016**
(21) Application number: 15305387.1
(22) Date of filing: 16.03.2015
(51) Int. Cl.: H04L 29/06, H04W 12/08

(54) **Method and system of access of a mobile terminal to information in an area**

(71) Applicant: Thomson Licensing, 92130 Issy-les-Moulineaux (FR)
(72) Inventor: Defrance, Serge, 35576 Cesson-Sévigné (FR); Gautier, Eric, 35576 Cesson-Sévigné (FR); Gilberton, Philippe, 35576 Cesson-Sévigné (FR)
(74) Representative: Amor, Rim

(57) **Abstract**

The present disclosure relates to the field of information retrieval and provides a system and method allowing a mobile terminal (10) to access information in an area. It relies on a dynamic and reconfigurable association between a mobile terminal and a collection of relevant information stored in the database of the area. To this end, the mobile terminal obtains an authorization (13) to access the area, which also enables the mobile terminal to access information relating to objects located in the vicinity of the mobile terminal at the time it enters the area. Such information is stored in a database relative to the area.

## Description

### 1. Field

The present disclosure relates to the field of information retrieval. More precisely, the present disclosure relates to a method for accessing information collected and stored in an area, by a mobile terminal such as a smartphone, a PC, a touchpad, or more generally a single processor...

### 2. Background

The number of users of mobile terminals, such as smartphones, is ever increasing. Actually, smartphones offer efficient user interfaces to many services. These services may be offered by servers running on the cloud, and accessed from the smartphone via a network connection. They may also be offered as a result of a local application running on the smartphone itself. This last option is getting more and more popular, since smartphones offer always increasing computing facilities and now frequently include many sensors.

At the same time, the strong development of Internet of the things leads to the emergence of smart areas (i.e. well delimited areas such as a building, a mall or a road intersection), in which information is collected and systematically stored in a common database. Such collected information comes from measures carried out inside the area, and, which may concern individuals located within the area and taking part to its activity. These measures may be based on several different techniques like face recognition, detection or communication with RFID tags, or even retrieval of data captured by smartphone sensors.

Applications running on mobile terminals could take great benefit of the use of raw data and information stored in databases associated with such smart areas. Actually, such information could help enhance the service provided to the user.

However, the amount of data collected in a smart area such as a building may be tremendous, while, at the same time, an application running on a mobile terminal only needs access to a small part of it, namely relevant information relating to the smartphone's user. Assessing relevance of information also raises security and privacy concerns: the information collected in a smart area cannot be delivered to any mobile terminal located in the smart area when requesting it. Information must be sorted out such that the mobile terminal may only have access to information, which it is allowed to.

A further difficulty arises from the fact that relevant information for a given application does not only depend on the user and its profile, but also depends on a context, and may rapidly change in time.

As an example, within a one-day period, several users may wear a same RFID wrist bracelet. Information related to this bracelet concerns a user's smartphone only when this user is wearing it.

It would hence be desirable to provide a technique allowing a mobile terminal to easily access relevant and authorized information in an area. It would also be desirable to provide such a technique, which would allow the mobile terminal to only access such relevant and authorized information.

It would also be desirable to provide such a technique, which would allow sorting relevant information in a dynamic and easily reconfigurable way.

### 3. Summary

In one embodiment, a method of access of a mobile terminal to information in an area is provided. Such a method comprises obtaining by the mobile terminal an authorization to access the area, and said authorization enables the mobile terminal to access information relating to objects located in the vicinity of the mobile terminal at the time it enters the area, said information being stored in a database relative to the area.

The present disclosure thus relies on a novel and inventive approach of accessing raw data collected and stored in a database associated with a delimited area, such as a building, a mall or a cross junction for example. Actually, the present disclosure allows identifying, among the huge amount of information stored in the database, which information is relevant and authorized to a given mobile terminal, and providing easy access to such relevant and authorized information.

Hence, at the time the mobile terminal enters the area, objects, which are located in its vicinity, are associated with it. The mobile terminal will then be authorized to access information relating to these associated objects, during its displacement within the area.

Such a method is transparent for the mobile terminal's user. It allows leverage effect for smartphone applications, which are able to access additional data collected by other systems within the area.

As the authorization to access information stored in the area database is linked to the authorization to enter the area, it allows for a dynamic and reconfigurable access by the mobile terminal to the raw data stored in the area database. It is well adapted to ephemeral access to the area database.

According to a further embodiment, said information relating to objects is measurement data associated with said objects.

Such measurement data may be distances measured by sensors positioned around the mobile terminal, and may be used by localization applications running on the mobile terminal to enhance their results. They may be any other kind of measurement data associated with the objects of interest for the mobile terminal, which will be processed by the mobile terminal, and used to offer a final service to the user.

According to a further embodiment, said authorization to access the area is an authorization to access a wireless local network of said area.

Actually, when a user enters an area such as a building, it is common that its mobile terminal launches a WiFi^{®} credential acquisition process, in order to gain access to a local network. The moment when the mobile terminal gains its credentials for accessing the local network of the area easily defines an entering instant, corresponding to when the mobile terminal enters the area. From this entering instant, all measures related to the objects close to the terminal should be available to the mobile terminal.

It must be noted that the authorization to access the area may also be delivered by a biometric data reader, which checks the identity of the user before authorizing his/her access to the area, or by a card reader, controlling the aperture of an access gate.

According to a further embodiment, the mobile terminal receives said information through the wireless local network. It is actually efficient to use the local network to which the mobile terminal is already connected to provide it with the relevant information stored in the database of the area.

According to yet a further embodiment, said authorization is obtained by using a NFC ("Near Field Communication") tag. It hence requires the smartphone's user to voluntarily move the mobile terminal close to a NFC tag located for example at the entrance of the area. Doing so, the user gains a network connection, which will also allow the mobile terminal to access the database of the area. It is a simple and efficient way to launch an association process between the mobile terminal, at the time it enters the area, and the objects located in its close vicinity at that same time.

According to yet a further embodiment, said authorization is temporary and is valid until the mobile terminal leaves said area. Hence, the mobile terminal may access the raw data in the area database as long as it is located inside the area, but such an access ceases at a "leaving instant", which may be defined, for example, as the moment when the mobile terminal is not detected anymore in the local area network. The credentials for accessing information related to objects, stored in the database, are removed from the mobile terminal, which will have to go through a new entering instant process, when it comes back to the area.

According to yet a further embodiment, said objects belong to the group comprising:
- a RFID tag;
- a picture fingerprint;
- biometric data.

More generally, it may be any kind of measurable object, i.e. any object for which measurements may be performed and stored in the database of the area.

The present disclosure also concerns a system of access of a mobile terminal to information in an area, comprising means for authorizing the mobile terminal to access the area. Such a system also comprises means for associating the mobile terminal with objects located in the vicinity of the mobile terminal at the time it enters the area; said means for authorizing the mobile terminal to access the area enable the mobile terminal to access information relating to said objects, said information being stored in a database relative to the area.

According to an embodiment of the invention, said means for associating comprise an association booth at the entrance of the area into which the mobile terminal passes when entering the area. It is hence easy to precisely detect which objects should be associated with the mobile terminal, namely all objects located within the association booth, which is equipped with sensors for detecting them.

According to a further embodiment, said information relating to objects is measurement data associated with said objects.

According to yet a further embodiment, said means for authorizing use a NFC tag.

The present disclosure also concerns a computer program comprising software code adapted to deliver to a mobile terminal an authorization to access an area, to associate the mobile terminal with objects located in the vicinity of the mobile terminal at the time it enters the area and to enable the mobile terminal to access information relating to said objects, said information being stored in a database relative to the area.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD--ROM); an optical storage device; a magnetic storage device; or any suitable combination of the foregoing.

### 4. Brief description of drawings

Embodiments of the invention can be better understood with reference to the following description and drawings, given by way of example and not limiting the scope of protection, and in which:
- **Figure 1** depicts a schematic flow diagram illustrating the method of accessing information in an area according to an embodiment of the invention;
- **Figure 2** illustrates a schematic block diagram of a system and computer program product implementing an embodiment of the present invention.

The components in the figures are not necessarily to scale, emphasis instead being placed upon illustrating the principles of the invention.

### 5. Description of embodiments

The general principle of the present disclosure relies on a dynamic and reconfigurable association between a mobile terminal and a collection of relevant information stored in the database of a smart area. It allows for a personalized and ephemeral access to raw data collected by a set of sensors within the smart area.

By mobile terminal, it is meant here, and throughout this document, any kind of terminal, which may be carried by a user while he/she travels through an area, such as a smartphone, a PC, a tactile pad, or more simply a processor, which may receive and process information stored in the database of the area.

By area, it is meant here and throughout this document a geographically identified zone, equipped with sensors connected to a local network, and through which a user may travel, either as a pedestrian or by car, bus, bike... An example of such an area may be an official building, a mall, a cross junction, a swimming-pool, a stadium, an airport, a hospital...

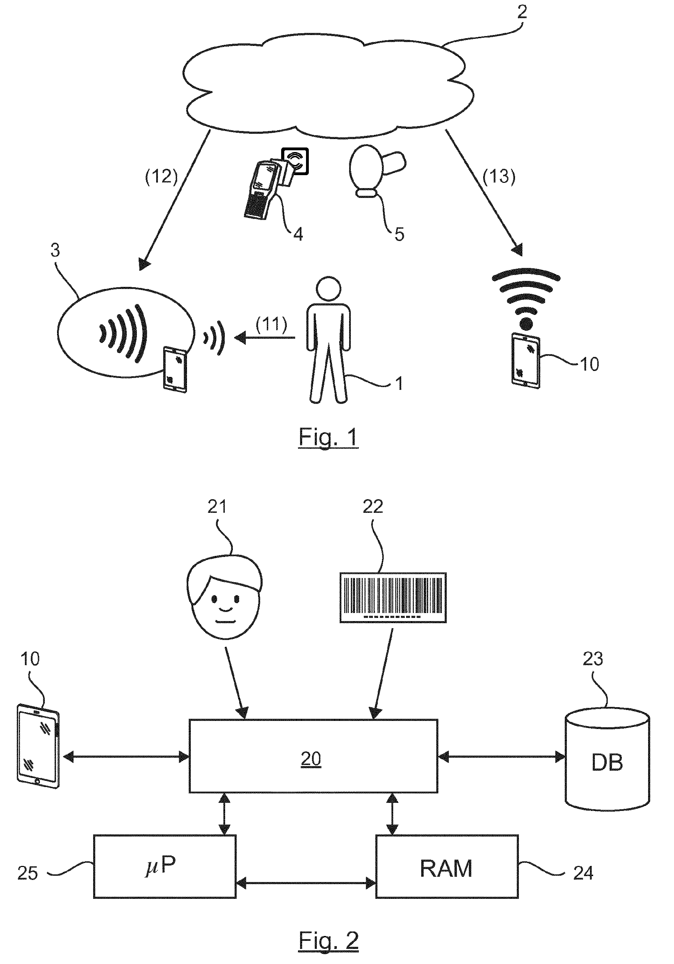

An embodiment of the invention will now be described in details in relation to figure 1, which shows a user 1 carrying a smartphone 10. User 1 enters a building and goes through an entrance booth 2, located at the entrance of the building. Entrance booth 2 is equipped with a NFC tag 3. User 1 voluntarily moves 11 his/her smartphone 10 close to the NFC tag 3, in order to launch a WiFi^{®} credential acquisition process. Doing so, user 1 gains a network connection 12 to the local network of the building. Such a local network may be a wireless network, or any other kind of local network comprising sensors and communication equipment linked together through any communication technique.

While user 1 is inside the entrance booth 2, sensors detect all measurable objects located in the immediate proximity of the NFC tag 3, and hence located in the immediate proximity of the user. As an example of sensors, figure 1 illustrates a RFID tag reader 4 and a camera 5.

By measurable objet, it is meant here and throughout this document an object for which measurements may be performed and stored in the database of the area.

Examples of measurable objects are:
- RFID tags, which may be worn as RFID wrist bracelet by the user, or sewn inside the user's clothes. RFID tags may be first detected by RFID reader 4 inside the entrance booth 2, and further detected in the building by other RFID readers. Measurements related to the RFID tag comprise for example the position of the detecting reader, the time of detection, and possible additional data stored in the RFID tag (like a temperature measurement carried out by the tag itself). Such measurements are collected by the RFID reader and stored in the database of the area;
- Picture fingerprints. Faces of the user 1, as well as faces of people going with user 1, may be detected by camera 5 in the entrance booth 2. A processor cooperating with camera 5 computes a fingerprint for each detected face. Other cameras located throughout the building may detect the faces while the user travels through the building, and check the fingerprints. Associated data, such as the location of the detection, the time of detection, the associated picture, are stored in the database of the building.

- Biometric data associated with the user 1 or with people going with him/her. Such biometric data may comprise a user's fingerprint, a way of walking, a user's size... They are collected by dedicated sensors.

The above list is of course not exhaustive, neither as regards measurable objects, nor as regards associated measurement techniques. In particular, new emerging measurement techniques may be used according to embodiments of the invention.

When user 1 gets WiFi^{®} credentials 12 for accessing the building WiFi^{®} network, it also gets credentials 13 for a personalized access to the raw data base of the building, as well as to complementary applications available through the building WiFi^{®} network. Authorization 13 to access to measures is restricted to measures generated by the objects located close to the smartphone 10 when the user 1 is inside the entrance booth 2.

Using such an association booth 2 allows for easily and precisely discriminating objects, which have to be associated with the smartphone 10 and objects, which should not, based on proximity criteria. However, other techniques may be used for such a discrimination, which may be based on evaluating a maximum distance between the object and the user's smartphone 10.

More generally, embodiments of the invention rely on defining an entering instant, corresponding to when the smartphone enters the building or the area, and to detecting all measurable objects, which are in the immediate vicinity of the smartphone at this entering instant. All measures related to these objects are then available to the smartphone while it travels through the area. One possible definition of the entering instant is the time when the smartphone gains its credentials for accessing the building local network. Many other possible definitions of the entering instant may also be used. For buildings with restricted access, the entering instant may be the time when the user swipes his/her card to open an access gate, or when a camera located at the entrance of the building detects the registered user enters the building. For areas requiring an entrance fee, the entering instant may be defined as the moment when the user goes through a cash register, or uses his/her smartphone to pay the entrance fee.

Whatever the definition used, it is important that it guarantees a reliable and precise detection of where the smartphone is, and makes it possible to detect at the same time and at the same place other objects, which should be associated with the user, and which are likely to generate measurements.

Back to **figure 1****,** once the smartphone 10 has gained credentials 13 for accessing measurement data generated by the objects associated with it, the user 1 may leave the entrance booth 2 and travel through the building. During his/her displacements, sensors located in the building will detect the objects, and generate measurements, which will be stored in the database of the area. Thanks to credentials 13, applications running on smartphone 10 can access these measures and use them to enhance the service delivered to user 1.

In the embodiment of **figure 1****,** all these measures are only available to the smartphone for a defined period of time, for example as long as the user is located inside the area. A "leaving instant" must hence be defined. One possible definition of the leaving instant is when the smartphone is not detected anymore in the wireless local network of the area. The credentials for accessing data are then removed, and the smartphone will have to go through a new entering instant process if it needs to gain further access to information stored in the database. It is actually important to repeat the association procedure (between the user's smartphone and the objects located in its vicinity) each time the user enters the area, in order to ensure that associated information has been recently selected.

The leaving instant may also be defined as the moment when the user goes out of the building through an access gate (for example when the user swipes his/her access card out, or when a RFID reader embedded in the access gate detects a RFID tag on the user's clothes).

Embodiments of the invention find applications in many different scenarios, examples of which will be described hereafter.

### Indoor localization:

When arriving in a building (a hospital, an airport, a supermarket...), the user 1 is suggested to tag his/her smartphone at a dedicated booth 2 to access services associated to the building. When tagging 11 his/her smartphone, user 1 is proposed to download an indoor localization application. At the same time, a RFID reader 4 located inside the booth 2 detects RFID ("Radio Frequency Identification") tags inserted or sewn in the user's clothes.

When walking inside the building, RFID readers located throughout the building detect and carry out measurements on RFID tags worn by user 1. RFID readers are connected to the local network and to the database of the building. The time and place where a RFID tag was detected is stored in the database.

Thanks to credentials 13, the indoor localization application running on smartphone 10 can access these measures and locate the user 1, or refine a predictive localization based on measures carried out by smartphone embedded sensors.

In a further or complementary embodiment, a camera 5 takes a picture of the user's face at the entrance booth 2, while the user 1 tags his/her smartphone 10. A computing device connected to the camera 5 calculates a user face fingerprint. The user face fingerprint is recorded in association with the MAC ("Media Access Control") address of the smartphone in a dedicated device of the local network.

Further cameras located throughout the building take pictures of people, and compute associated fingerprint, which are stored in the database, along with the time and place where they have been detected. The application running on smartphone 10 may access to measures associated to the user's face fingerprint, as recorded at the entrance booth 2, and use them to locate the user 1.

It must be underlined that both types of measures require a dynamic association process: actually, clothes worn by the user may change from day to day, and RFID tags have to be newly detected every day. In the same way, face appearance (tiredness, hair,...) may change as well; face detection will provide better results with an up-to-date picture of the user.

### Market place client tracker:

Another application of embodiments of the invention consists in measuring the route of the user 1 inside a market place, tracking the time the client is spending in front of particular shelves of the store.

When the user goes through the access gate to the market place, the local network detects that the user has entered the area, and sensors located at the access gate detect the objects, which should be associated with the user's smartphone. As an example, RFID readers embedded in the access gate detect the RFID transponders sewn inside the user's clothes. The user gets credentials to access the wireless local network in the market place, along with credentials to access the information, which will be measured by RFID readers dispatched throughout the market place, in association with the RFID tags in the user's clothes. The user is also invited to download on his/her smartphone, an application dedicated to the market place.

RFID readers located on the shelves detect RFID tags worn by the user, while he/she passes through the alleys of the market place. Optionally, time counters can be launched for a shelf or a category of them, to get an accurate measurement of the time spent by the user in front of the shelf. Measurements comprising the shelf in front of which the user has been detected, the time of detection, the time spent in front of the shelf are recorded in the market place database.

All useful information can then be accessed by the smartphone, through the wireless local network of the market place, and is collected and stored in the smartphone. It can then be uploaded by the application running on the smartphone to a server under the control of the market place owner. Such a server can process the uploaded information for statistical purpose to help improve his knowledge of his/her clients' habits, in order to refine or optimize his shelves implementation.

The user may decide whether the information uploaded by his/her smartphone onto the market place server is anonymous or not. In case the user agrees giving his/her identity, the information may be stored in a user profile on the market place server or in the smartphone itself. The application running on the smartphone may share the user profile with a voucher application running on the market place server or on the cloud, which will deliver reduction coupons to the user's smartphone.

The cash register of the market place is also equipped with a RFID reader. When the user goes by the cash register, the RFID reader detects the RFID tags he is wearing and sends a message to the tracking devices connected to the local network, so as to stop tracking this user. The authorization, which had been delivered to the smartphone for accessing information stored in the market place database, is no longer valid, and the credentials for accessing data are removed.

### Kid supervision helper:

Parents going to the swimming pool with their kids need to be very careful and keep a close eye on their kids, in order to avoid that they get into dangerous areas where they could drown themselves. Embodiments of the invention help parents supervise their kids. To this purpose, the user downloads a swimming pool supervising application on his/her smartphone. When entering the swimming pool, the parent's smartphone is associated with the face fingerprint or the RFID bracelet of the kid(s) accompanying the parent. For example, the parent gets voluntarily photographed with his children by a dedicated camera located at the entrance to the locker rooms.

The dedicated application may regularly poll the database of the swimming pool to check that neither the face fingerprints nor RFID tags associated with the parent and kids have been detected by RFID readers or cameras located in the dangerous areas or on the way to these dangerous areas, where kids should not be alone.

In case a positive match is found, the application running on the smartphone delivers a warning message to the user: the smartphone may ring or flash in order to quickly alert the parent.

### Other examples:

Many other interesting applications of embodiments of the invention may be foreseen. A further application may help the user avoid being robbed by a pickpocket in the subway. Let's imagine that both the user's jacket and the user's wallet are equipped with a RFID tag. When the user goes through the subway access gate, RFID readers detect these RFID tags. They are recorded in association with an identifier of the user within the subway local network. At the same time, the user's smartphone gets an authorization for accessing information collected and recorded in the subway database in association with his/her wallet and jacket RFID tags. The smartphone must also get access to the subway local network.

While travelling by tube, RFID readers located in the trains and on the platforms detect the wallet and jacket RFID tags. As soon as a RFID reader detects that the wallet RFID tag is not close enough to the jacket RFID tag, the local network sends an alert to the user's smartphone, to advise him that he/she may have lost his/her wallet, or that a pickpocket may have stolen it.

Embodiments of the invention also find applications when the user travels by car, in order to help him/her travel through a road junction. The entering instant may be defined as the time when the user's car goes through a tollbooth. Sensors such as ultrasonic sensors or cameras measure the distance between the user's car and other vehicles. An application running on the user's smartphone gets access to these measurements and provides advice to the user to help him/her travel through the road junction without having an accident.

**Figure 2** illustrates a schematic block diagram of a system 20 implementing an embodiment of the present invention. System 20 comprises a set of devices connected to each other through a local network. Among these devices are sensors such as RFID readers, cameras, ultrasonic sensors, ... Such sensors are able to detect objects such as user's face 21 or RFID tags 22.

A wireless access point is also part of system 20; it communicates with smartphone 10 and gives it an authorization to access the local network, which may be assimilated to an authorization to access the area. Such a wireless access point may embody means for authorizing the mobile terminal to access the area. Such means may also be more simply formed with an access gate to the area.

System 20 cooperates with a processor µP 25, a memory RAM 24 and a database DB 23.

At the time the mobile terminal 10 enters the area, sensors of system 20 detect the user's face 21 and the RFID tag 22. Processor µP 25 processes the data delivered by sensors in order to associate them with an identifier of the mobile terminal 10. As such, processor µP 25 embodies means for associating the mobile terminal with objects located in its close vicinity. More generally, such means are devices with computing capabilities or data handling devices. The result of the association is stored by µP 25 in memory RAM 24.

System 20 also comprises other sensors dispatched throughout the area or building, which collect information and measurements relating to user's face 21 and RFID tag 22; such information is stored in database 23.

Mobile terminal may send a request to system 20 for accessing such information stored in database 23. The request is handled by processor µP 25, which gives authorization to mobile terminal 10 to access some information in database 23, if the association process has gone through correctly, and if the mobile terminal is still inside the area.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro--code, and so forth), or an embodiment combining software and hardware aspects that can all generally be referred to herein as a « circuit », « module », or « system ». Furthermore, aspects of the present principles can take the form of a computer readable storage medium. Any combination of one or more computer readable storage medium(s) may be utilized.

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

While not explicitly described, the present embodiments may be employed in any combination or sub-combination. For example, embodiment of figure 1 may be combined with the embodiment of figure 2; likewise, elements of the application for kid supervision and/or market place tracker may be combined with elements of the application for indoor localization and/or for vehicle guidance.

## Claims

1. Method of access of a mobile terminal (10) to information in an area, comprising obtaining by the mobile terminal an authorization to access the area,
**wherein** said authorization (13) enables the mobile terminal to access information relating to objects (21, 22) located in the vicinity of the mobile terminal (10) at the time it enters the area, said information being stored in a database (23) relative to the area.

2. Method according to claim 1, wherein said information relating to objects (21, 22) is measurement data associated with said objects.

3. Method according to any of claims 1 and 2, wherein said authorization to access the area is an authorization (13) to access a wireless local network of said area.

4. Method according to claim 3, wherein the mobile terminal (10) receives said information through the wireless local network.

5. Method according to any of claims 1 to 4, wherein said authorization is obtained by using a NFC tag (3).

6. Method according to any of claims 1 to 5, wherein said authorization is temporary and is valid until the mobile terminal (10) leaves said area.

7. Method according to any preceding claim, wherein said objects belong to the group comprising:
- a RFID tag (22);
- a picture fingerprint;
- biometric data (21).

8. System of access of a mobile terminal (10) to information in an area, comprising means for authorizing the mobile terminal to access the area,
wherein it comprises means (25) for associating the mobile terminal with objects (21, 22) located in the vicinity of the mobile terminal at the time it enters the area and wherein said means for authorizing the mobile terminal to access the area enable the mobile terminal to access information relating to said objects, said information being stored in a database (23) relative to the area.

9. System according to claim 8, wherein said means for associating comprise an association booth (2) at the entrance of the area into which the mobile terminal passes when entering the area.

10. System according to claim 8 or 9, wherein said information relating to objects (21, 22) is measurement data associated with said objects.

11. System according to any of claims 8 to 10, wherein said means for authorizing use a NFC tag (3).

12. A computer program comprising software code adapted to deliver to a mobile terminal (10) an authorization to access an area, to associate the mobile terminal with objects (21, 22) located in the vicinity of the mobile terminal at the time it enters the area and to enable the mobile terminal to access information relating to said objects, said information being stored in a database (23) relative to the area.
